# EUROPEAN PATENT APPLICATION

(11) **EP 4 761 248 A1**
(43) Date of publication of application: **17.06.2026**
(21) Application number: 23949823.1
(22) Date of filing: 23.08.2023
(51) Int. Cl.: H04N 21/43, H04N 21/436, H04N 21/4363, H04N 21/6334, H04N 21/643

(54) **A/V TRANSMISSION APPARATUS AND METHOD**

(71) Applicant: LG ELECTRONICS INC., Yeongdeungpo-gu Seoul 07336 (KR)
(72) Inventor: HAN, Dong Hee, Seoul 06772 (KR); JANG, Yoon Suk, Seoul 06772 (KR)
(74) Representative: Vossius & Partner Patentanwälte Rechtsanwälte mbB
(86) International application number: PCT/KR2023/012485
(87) International publication number: WO 2025/041883

(57) **Abstract**

Disclosed are an A/V transmission apparatus and method. The A/V transmission apparatus, according to at least one of various embodiments of the present disclosure, comprises a processor for generating key data for pairing with an A/V reception apparatus, registering the key data in a first server, and controlling so as to be paired with the A/V reception apparatus according to a pairing request from the A/V reception apparatus, which includes the key data registered in the first server.

## Description

### [Technical Field]

The present disclosure relates to an apparatus and method for wirelessly transmitting A/V data.

### [Background Art]

Digital TV services using wired or wireless communication networks are becoming widespread. Digital TV services can provide a variety of services not available with existing analog broadcasting services.

For example, IPTV (Internet Protocol Television) and smart TV services, which are types of digital TV services, provide interactivity, allowing users to actively select the type of program to watch and the viewing time. Based on this interactivity, IPTV and smart TV services can also provide various additional services, such as Internet search, home shopping, and online games.

Recently, TV services have been provided through wireless systems, in which an A/V transmission apparatus transmits a compressed A/V (Audio/Video) signal to an A/V reception apparatus via a wireless connection, and the A/V reception apparatus decompresses and outputs the compressed A/V signal.

In wireless systems, RF (Radio Frequency) communication between A/V transmitters and receivers is performed via antennas. Therefore, the placement of the transmitting and receiving antennas is crucial for wireless quality.

Typically, the A/V transmitter is positioned directly in front of the A/V receiver. However, this occurs when the A/V transmitter's transmitting antenna is positioned in such a way that signals are transmitted through the side antenna.

In this case, the signal strength is weak. While increasing the number of operating transmitting antennas on the A/V transmitter can improve signal strength, this leads to increased power consumption.

Furthermore, conventional technologies utilize SVC (Service Center) guidance based on user log analysis during the process of responding to customer installation environments.

However, these methods involve visiting the customer's home to inspect the installation environment and adjust the wireless settings to optimal conditions, or providing installation guidance through a customer connection. This can lead to inconveniences due to changes in the initial installation environment or box location.

### [Detailed Description of the Invention]

### [Technical Problem]

The present disclosure provides a method for automatic pairing between an A/V transmission apparatus and an A/V reception apparatus.

The present disclosure provides a method for easily and safely pairing between an A/V transmission apparatus and an A/V reception apparatus without requiring a separate, manual PIN code entry process.

### [Technical Solution]

An Audio/Video (A/V) transmission apparatus according to at least one of the various embodiments of the present disclosure may include a processor configured to generate key data for pairing with an A/V reception apparatus and register the key data with a first server, and to control pairing with the A/V reception apparatus in response to a pairing request, which includes the key data registered with the first server, received from the A/V reception apparatus.

According to at least one of the various embodiments of the present disclosure, the processor transmits a packet including device identification information and connects with the A/V reception apparatus according to a first communication protocol.

According to at least one of the various embodiments of the present disclosure, when a first communication protocol connection is established with the A/V reception apparatus, the processor may obtain network information from the A/V reception apparatus and connect the A/V reception apparatus to the same network.

According to at least one of the various embodiments of the present disclosure, when connected to the same network as the A/V reception apparatus, the processor may generate the key data and register the key data with the first server.

According to at least one of the various embodiments of the present disclosure, the processor may transmit a signal including data corresponding to a signal input from the A/V reception apparatus via a second communication protocol to the A/V reception apparatus.

According to at least one of the various embodiments of the present disclosure, when there is a previous pairing history with the A/V reception apparatus, the processor may automatically perform a pairing operation with A/V reception apparatus upon connection to the same network, regardless of a pairing request from the A/V reception apparatus.

According to at least one of the various embodiments of the present disclosure, the first communication protocol may include Bluetooth Low Energy (BLE), and the second communication protocol may include Wi-Fi.

According to at least one of the various embodiments of the present disclosure, an A/V transmission method may include the steps of: generating key data for pairing with an A/V reception apparatus; registering the generated key data with a server; receiving a pairing request from the A/V reception apparatus, the pairing request including the key data registered with the server; and pairing with the A/V reception apparatus according to the pairing request.

According to at least one of the various embodiments of the present disclosure, the method may further include the steps of: transmitting a packet including device identification information; and connecting with the A/V reception apparatus according to a first communication protocol.

According to at least one of the various embodiments of the present disclosure, when a first communication protocol connection is established with the A/V reception apparatus, the method may further include: obtaining network information from the A/V reception apparatus; and connecting to the same network based on the obtained network information.

According to at least one of the various embodiments of the present disclosure, the key data may be registered on the server after being connected to the same network as the A/V reception apparatus.

According to at least one of the various embodiments of the present disclosure, the method may further include transmitting a signal including data corresponding to a signal input from the A/V reception apparatus to the A/V reception apparatus via a second communication protocol.

According to at least one of the various embodiments of the present disclosure, the method may further include checking whether there is a previous pairing history with the A/V reception apparatus; and when the checking result indicates that there is a previous pairing history with the A/V reception apparatus, automatically performing a pairing operation with the A/V reception apparatus upon connection to the same network, regardless of a pairing request from the A/V reception apparatus.

According to at least one of the various embodiments of the present disclosure, the first communication protocol may include Bluetooth Low Energy (BLE), and the second communication protocol may include Wi-Fi.

### [Effects of the Invention]

According to at least one of the various embodiments of the present disclosure, pairing between an A/V transmission apparatus and an A/V reception apparatus can be easily and safely achieved without manually entering a separate PIN code or the like.

According to at least one of the various embodiments of the present disclosure, the convenience of using a wireless display system for a user can be significantly improved.

### [Brief Description of Drawings]

FIG. 1 is a drawing illustrating the configuration of a display system according to one embodiment of the present disclosure.
FIG. 2 is a block diagram illustrating the detailed configuration of an A/V transmission apparatus and an A/V reception apparatus.
FIG. 3 is a block diagram illustrating the configuration of a remote control device according to one embodiment of the present disclosure.
FIG. 4 is a perspective view of an A/V transmission apparatus.
FIGS. 5 to 8 are diagrams illustrating a pairing process between an A/V transmission apparatus and an A/V reception apparatus according to an embodiment of the present disclosure.
FIG. 9 is a diagram illustrating outputting guidance information from an A/V reception apparatus according to the present disclosure.

### [Best Mode]

An audio/video (hereinafter, "A/V") transmission device according to an embodiment of the present disclosure is an intelligent device that adds computer support functions to a broadcast reception function, for example. While faithfully performing the broadcast reception function, it can also be equipped with Internet functions and other features, providing a more user-friendly interface, such as a handwritten input device, a touch screen, or a remote control.

Furthermore, with support for wired or wireless Internet functions, it can be connected to the Internet and a computer, enabling functions such as email, web browsing, banking, and gaming. A standardized, general-purpose operating system (OS) can be used for these various functions.

Therefore, the A/V transmission apparatus described in the present disclosure can perform various user-friendly functions, for example, since various applications can be freely added or deleted on a general-purpose OS kernel.

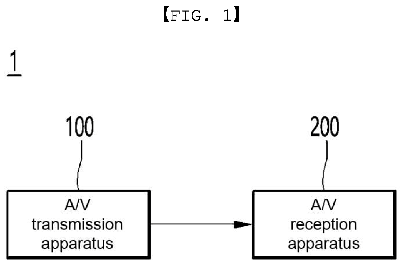

FIG. 1 is a diagram illustrating the configuration of a wireless display system 1 according to an embodiment of the present disclosure.

Referring to FIG. 1, the wireless display system 1 according to an embodiment of the present disclosure includes an A/V transmission apparatus 100 and an A/V reception apparatus 200.

The wireless display system 1 may be a system in which the A/V transmission apparatus 100 wirelessly transmits A/V data to the A/V reception apparatus 200, and the A/V reception apparatus 200 outputs the A/V data.

The A/V transmission apparatus 100 may be a device capable of encoding video and audio and wirelessly transmitting the encoded content video and audio.

The A/V transmission apparatus 100 may be a set-top box.

The A/V transmission apparatus 100 may be connected to an external device, such as a set-top box or a USB memory. The A/V transmission apparatus 100 may transmit a video signal or audio signal received from the connected external device to the A/V reception apparatus 200.

The A/V reception apparatus 200 may be a display device capable of wirelessly receiving encoded video and audio and decoding the received video and audio.

The A/V transmission apparatus 100 and the A/V reception apparatus 200 may constitute a video wall display system.

In a video wall, a display with a thin bezel plays a crucial role in visualizing content images. To achieve a thin bezel, it is efficient to have only components that perform minimal roles, and to have circuits or components for primary functions performed in a separate device.

The A/V transmission apparatus 100 can determine the type of content image input from an external source and, based on the determined type, determine the compression ratio of the content image. The compression ratio of the content image can be defined as the ratio of the size of the image data before encoding to the size of the image data after encoding.

The content image types can include still image types, general video types, and game video types.

The A/V transmission apparatus 100 can compress the content image according to the determined compression ratio and wirelessly transmit the compressed content image to the A/V reception apparatus 200.

The A/V reception apparatus 200 can restore a compressed content image received from the A/V transmitting device 100 and display the restored content image on a display.

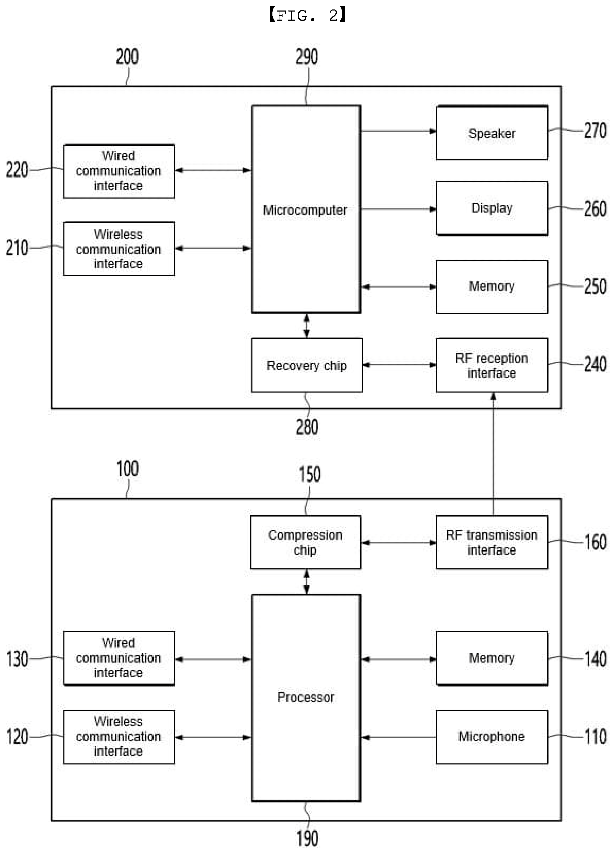

FIG. 2 is a block diagram illustrating the detailed configuration of the A/V transmitting device 100 and the A/V reception apparatus 200.

Referring to FIG. 2, the A/V transmitting device 100 may include a microphone 110, a wireless communication interface 120, a wired communication interface 130, a memory 140, a compression chip 150, an RF transmission interface 160, and a processor 190.

The microphone 110 may receive an audio signal and transmit it to the processor 190.

The microphone 110 may receive a voice spoken by a user.

The wireless communication interface 120 may include one or more of a Wi-Fi module and a Bluetooth module.

The Wi-Fi module may perform wireless communication with an external device or an A/V receiver 200 via the Wi-Fi standard.

The Bluetooth module may perform wireless communication via the Bluetooth Low Energy (BLE) standard.

The Bluetooth module may perform wireless communication with an external device, such as a remote control, or an A/V receiver 200 via the Bluetooth Low Energy (BLE) standard.

The wireless communication interface 120 may also include a tuner for receiving broadcast signals.

The wired communication interface 130 may be an interface for wired connection with an external device. The wired communication interface 130 may include multiple High Definition Multimedia Interface (HDMI) terminals or Universal Serial Bus (USB) ports.

The wired communication interface 130 can receive a video signal or audio signal from an external device.

The memory 140 stores a program for signal processing and control, and can store signal-processed video, audio, or data signals.

The memory 140 can also perform a function for temporarily storing video, audio, or data signals input from an external source, and can also store information about a specific image through a channel memory function.

The compression chip 150 can compress a video signal or audio signal input from an external source and transmit the compressed signal to the RF transmission interface 160.

The compression chip 150 can include an encoder for compressing the video signal or audio signal.

The RF transmission interface 160 may transmit an A/V signal to the RF reception interface 240 of the A/V reception apparatus 200 via RF (Radio Frequency) communication.

The RF transmission interface 160 may include one or more antennas.

The RF transmission interface 160 may transmit a compressed A/V signal in digital form to the RF reception interface 240.

The RF transmission interface 160 may transmit the A/V signal to the RF reception interface 240 via one or more channels.

The processor 190 may control the overall operation of the A/V transmission apparatus 100. The processor 190 may be referred to as a Main System on Chip (Main SoC).

The processor 190 may also include a compression chip 150.

The A/V reception apparatus 200 may include a wireless communication interface 210, a wired communication interface 220, an RF reception interface 240, a memory 250, a display 260, a speaker 270, a recovery chip 280, and a microcomputer 290.

The wireless communication interface 210 may include a Wi-Fi module, a Bluetooth module, and an IR module.

The Wi-Fi module may perform wireless communication via the Wi-Fi standard.

The Wi-Fi module may perform wireless communication with an external device or the A/V transmitting device 100 via the Wi-Fi standard.

The Bluetooth module may perform wireless communication via the Bluetooth Low Energy (BLE) standard.

The Bluetooth module can perform wireless communication with an external device, such as a remote control, or an A/V transmission apparatus 100 via the Bluetooth Low Energy (BLE) standard.

The IR (Infrared) module can receive signals from a remote control device 300, described later, via IR communication.

The wired communication interface 220 may be an interface for wired connection with an external device. The wired communication interface 220 may include multiple HDMI (High Definition Multimedia Interface) terminals or USB (Universal Serial Bus) ports.

The wired communication interface 220 may receive video signals or audio signals from an external device.

The RF reception interface 240 may receive a compressed A/V signal from the RF transmission interface 160.

The RF reception interface 240 may include multiple antennas. The RF reception interface 240 may be placed at the bottom of the display 260.

The RF reception interface 240 may include a first antenna module and a second antenna module. Each of the first antenna module and the second antenna module may include multiple antennas.

The RF reception interface 240 may receive a compressed A/V signal in digital form from the RF transmission interface 160 and transmit the received A/V signal to the decoding chip 280.

The memory 250 may store a program for signal processing and control and may store signal-processed video, audio, or data signals.

The display 260 may display a video signal received from the microcomputer 290.

The display 260 may display the video signal according to the operation of a timing controller (not shown).

The decoding chip 280 may decode the compressed A/V signal received by the RF reception interface 240. For this purpose, the restoration chip 280 may include a decoder.

The microcomputer 290 may control the overall operation of the A/V reception apparatus 200.

The microcomputer 290 may output a restored video signal through the display 260 and output a restored audio signal through the speaker 270.

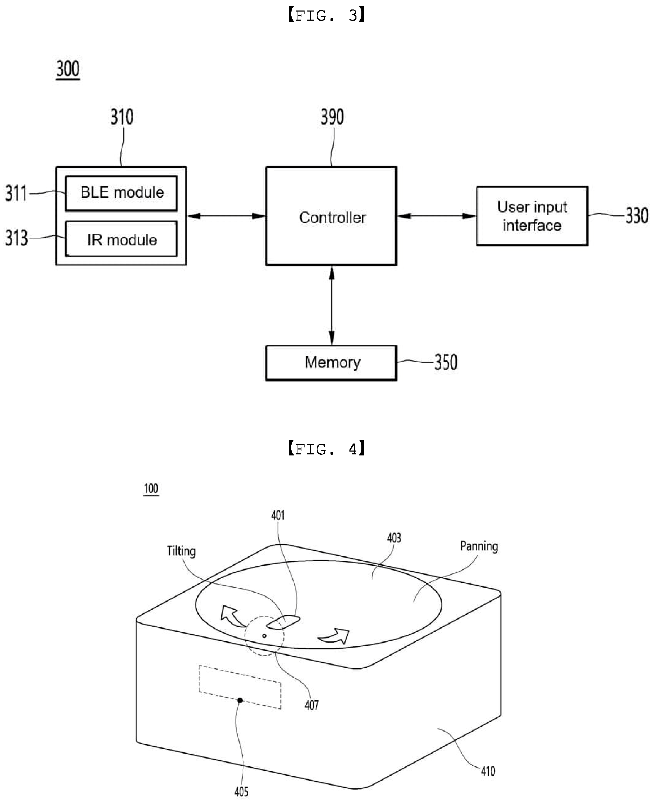

FIG. 3 is a block diagram illustrating the configuration of a remote control device according to an embodiment of the present disclosure.

Referring to FIG. 3, the remote control device 300 may include a wireless communication interface 310, a user input interface 330, a memory 350, and a controller 390.

The wireless communication interface 310 may be an interface for performing wireless communication with the A/V transmitting device 100 or the A/V reception apparatus 200.

The wireless communication interface 310 may include a Bluetooth Low Energy (BLE) module 311 and an IR module 313.

The BLE module 311 may transmit a signal to the A/V transmission apparatus 100 for controlling the operation of the A/V transmission apparatus 100.

The BLE module 311 may transmit a signal to the A/V transmission apparatus 100 for triggering a pairing operation of the A/V transmission apparatus 100.

The user input interface 330 may be configured as a keypad, button, touchpad, or touch screen.

The user input interface 330 may generate control commands for controlling the operation of the A/V transmission apparatus 100 or the A/V reception apparatus 200 according to a user's operating command.

If the user input interface 330 includes a hard key button, the user can operate the hard key by pushing the hard key button.

The user input interface 330 may include various types of input means that the user can operate, such as a scroll key or a jog key.

The memory 350 can store a program for the operation of the controller 390 and can also temporarily store input/output data.

The controller 390 controls operations related to the application program and, typically, the overall operation of the remote control device 300.

FIG. 4 is a perspective view of the A/V transmission apparatus 100.

Referring to FIG. 4, the A/V transmission apparatus 100 may include a box 410, a sliding button receiving portion 401 that receives a sliding button 401, a dial 403, a power status display portion 405, and a communication quality status display portion 407.

The interior of the box 410 may contain components of the A/V transmission apparatus 100 described in FIG. 2. The box 410 may be a housing that includes components of the A/V transmission apparatus 100 described in FIG. 2.

The sliding button 401 may be a means for controlling the vertical direction (tilting control) of the RF transmission interface 160.

The dial 403 may be a means for controlling the horizontal rotation direction (panning control) of the RF transmission interface 160.

The power status display unit 405 may indicate the power on or off status of the A/V transmission apparatus 100. The power status display unit 405 may include one or more LEDs.

The communication quality status display unit 407 may indicate the communication quality status between the A/V transmission apparatus 100 and the A/V reception apparatus 200. The communication quality status display unit 407 may include one or more LEDs.

The communication quality status display unit 407 may be an optional configuration and may not be included in the box 410.

The processor 190 may receive a pointing correction input via the sliding button 401 or the dial 403.

The processor 190 can tilt the RF transmission interface 160 including the transmission antennas up and down in response to an input that moves the sliding button 401.

The RF transmission interface 160 can include a substrate and a plurality of transmission antennas. The RF transmission interface 160 can be provided on top of a heat sink 611 that discharges heat generated within the box 410.

The processor 190 can rotate or pan the RF transmission interface 160 including the transmission antennas left and right in response to an input that moves the dial 403.

The user can perform an antenna pointing correction operation by operating the sliding button 401a or the dial 403 while looking at the antenna guide used to adjust the direction of the transmission antenna.

According to another embodiment of the present disclosure, a motor (not shown) for automatically controlling the tilting of the RF transmission interface 160 according to information about the determined vertical correction angle and a motor (not shown) for automatically controlling the panning of the RF transmission interface 160 according to information about the determined horizontal correction angle may be further provided in the box 410.

In this case, the RF transmission interface 160 may be set to have an optimal arrangement structure without a separate guide, thereby maximizing user convenience.

Hereinafter, to facilitate understanding of various embodiments of the present disclosure, a case in which there is one A/V transmission apparatus 100 and one A/V reception apparatus 200 in the wireless digital system 1 will be described as an example, but there may be multiple A/V reception apparatus.

Meanwhile, the A/V reception apparatus 200 is exemplified below as a display device, but is not limited thereto. It may also include any device, including home appliances, that can be connected to the same network as the A/V transmitting device 100, or at least connectable to the A/V reception apparatus 200 connected to the same network as the A/V transmitting device 100.

Furthermore, the A/V transmitting device 100 may individually perform a pairing process with each A/V reception apparatus belonging to the same network.

Alternatively, if the A/V transmitting device 100 performs a pairing process with at least one A/V reception apparatus belonging to the same network, a device capable of pairing with the at least one A/V reception apparatus, for example, a device included in the pairing list of the at least one A/V reception apparatus, may automatically perform pairing without performing a separate verification or confirmation process.

Alternatively, if the A/V transmission apparatus 100 has performed a pairing process with at least one A/V reception apparatus belonging to the same network, it can automatically perform pairing with one or more other A/V reception apparatus belonging to the network without performing a separate verification or confirmation process.

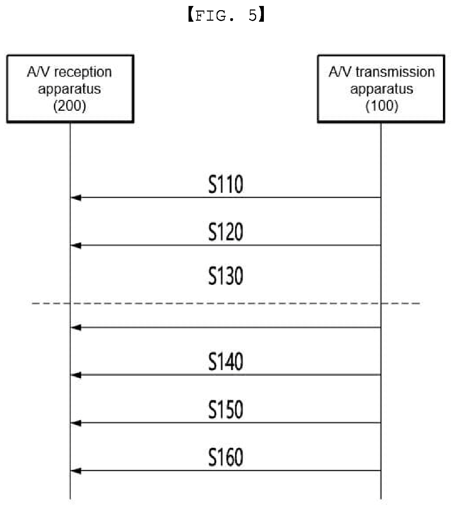

FIGS. 5 to 8 are diagrams illustrating a pairing process between an A/V transmission apparatus 100 and an A/V reception apparatus 200 according to one embodiment of the present disclosure.

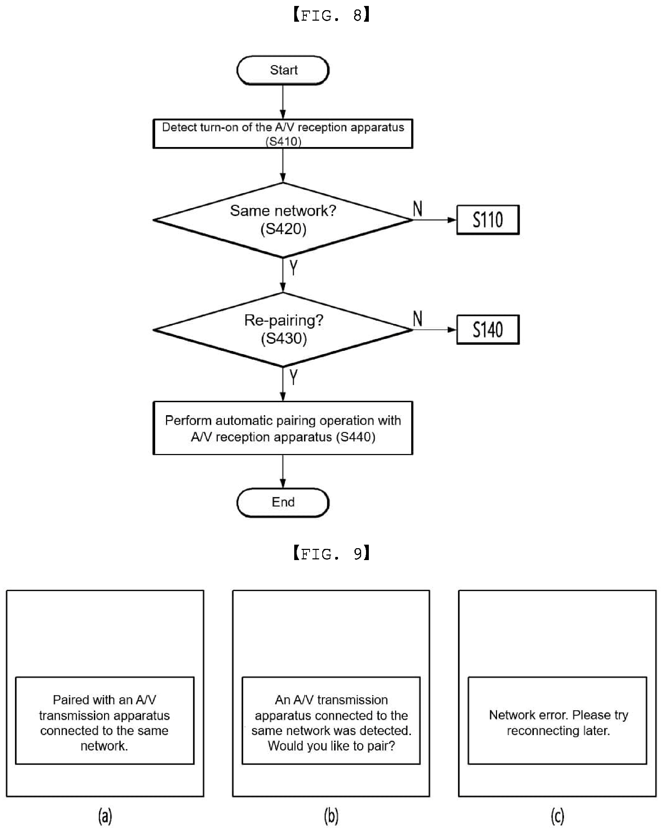

FIG. 9 is a diagram illustrating outputting guidance information from an A/V reception apparatus 200 according to the present disclosure.

However, although the pairing process is described from the perspective of the A/V transmission apparatus 100 (or processor 190) with respect to FIG. 5, the present disclosure is not limited thereto.

Referring to FIG. 5, an A/V transmission method according to at least one of the various embodiments of the present disclosure may be performed as follows.

For convenience, steps S110 to S160 described below may be performed based on a first communication protocol, and the remainder may be performed based on a second communication protocol. At this time, the first communication protocol may include BLE (Bluetooth Low Energy), and the second communication protocol may include Wi-Fi.

At step S110, the processor 190 may transmit a BLE packet including device identification information. At this time, transmission may represent, for example, advertising or broadcasting.

The A/V reception apparatus 200 may periodically/aperiodically scan and acquire the BLE packet advertised by the processor 190. The A/V reception apparatus 200 may acquire device identification information within the acquired BLE packet. Based on the acquired device identification information, the A/V reception apparatus 200 may identify that it is the A/V transmitting device 100.

At step S120, the processor 190 verifies the BLE packet from the A/V reception apparatus 200. If it is confirmed that the BLE packet is a BLE packet transmitted from the A/V transmitting device 100, a connection procedure (BLE connection) may be performed between the two. The BLE connection is based on BLE technology, and a separate detailed description thereof will be omitted.

At step S130, the processor 190 may obtain network information from the A/V reception apparatus 200, as it is necessary to belong to the same network in order to wirelessly transmit and receive signals with the A/V reception apparatus 200. At this time, the network information may include the ID and password of the network to which the A/V reception apparatus 200 belongs. Meanwhile, the network may include a Wi-Fi network.

In the above, the A/V transmission apparatus 100 can always advertise a BLE packet when turned on. Alternatively, even if the A/V transmission apparatus 100 is turned on, it can advertise a BLE packet only when at least one device is detected within a predetermined range.

If the A/V reception apparatus 200 is turned on, it can always check whether a BLE packet is detected, and acquire and parse the detected BLE packet. Alternatively, even if the A/V reception apparatus 200 is turned on, it can check whether a BLE packet is detected and parse it only when there is a device operation signal from a user, such as an input means such as a remote control or a touch.

If at least one of the A/V transmission apparatus 100 and the A/V reception apparatus 200 is turned on, the device may transmit a wake-up signal to turn on the other device that is turned off. For example, if the A/V reception apparatus 200 is turned on and an operation signal is received from the user, but the A/V transmission apparatus 100 is turned off, the A/V reception apparatus 200 may transmit a wake-up signal to the A/V transmission apparatus 100 to perform the pairing process of FIG. 5 described above. The opposite case also applies. At this time, the wake-up signal may be, for example, HDMI-CEC (High-Definition Multimedia Interface-Consumer Electronics Control), but is not limited thereto.

Steps S110 to S130 described above can be viewed as the first step (or preparatory step) for wireless transmission and reception between the A/V transmitting device 100 and the A/V reception apparatus 200.

Next, after step 1 is performed, in step S140, the processor 190 generates security data, for example, key data (or temporary key), for verification purposes to enable pairing operation with the A/V reception apparatus 200 belonging to the same network, and registers the same with the server. At this time, the server may be a GATT server based on the BLE communication protocol. However, the present invention is not limited thereto.

Meanwhile, the aforementioned temporary key may be generated by a random number generation program or algorithm. The temporary key may be defined in various ways, such as an eight-digit digit, a number, text, special characters, or a combination thereof. The present invention is not limited thereto. Meanwhile, depending on the embodiment, the temporary key may be replaced with or combined with biometric information such as audio, fingerprint, or iris.

In step S140, when the processor 190 registers the temporary key with the GATT (Generic Attribute Profile) server, the A/V reception apparatus 200 may receive it from the GATT server. Depending on the embodiment, the GATT server may further verify whether the A/V reception apparatus 200 belongs to the same network.

In step S150, the processor 190 may receive a pairing request from the A/V reception apparatus 200 including the temporary key received from the GATT server. The pairing request may be a Second Screen Gate (SSG) pairing request.

In step S160, the processor 190 may accept the pairing request from the A/V reception apparatus 200 and perform the pairing procedure.

At step S170, the processor 190 may receive a device operation signal from the A/V reception apparatus 200 via a second communication protocol and transmit a signal containing corresponding data. The device operation signal may include various operation signals, such as screen loading and channel change.

Meanwhile, in the present disclosure, both the A/V transmitting device 100 and the A/V reception apparatus 200 may be performed in the background without any displayed information.

However, if an issue arises during the pairing procedure performed in the background, the display of the A/V reception apparatus 200 may be utilized, for example. For example, as illustrated in (a) to (c) of FIG. 9, the A/V transmission apparatus 100 and the A/V reception apparatus 200 may provide various guide information, such as connection to the same network and completion of pairing, a connection request with the A/V transmission apparatus 200 connected to the same network, network error, and reconnection guidance.

In the present disclosure, the A/V reception apparatus 200 may be a transparent display device. When the A/V transmission apparatus 100 is detected, the A/V reception apparatus 200 may perform the following operations.

When the A/V transmission apparatus 100 is searched, the A/V reception apparatus 200 may select the searched A/V transmission apparatus 100. At this time, the A/V reception apparatus 200 may output a guidance screen indicating that pairing is in progress on the display. However, in this case, pairing may be performed in the background along with the network connection. When the pairing operation of the A/V reception apparatus 200 is completed, operations such as screen loading may become possible. The A/V reception apparatus 200 may change the settings of the A/V transmitting device 100 after the screen loading.

Meanwhile, when the A/V transmitting device 100 is turned on, it may blink the pairing light (LED) and perform the same network connection and pairing operation as the A/V reception apparatus 200 in the background. When pairing is completed, the A/V transmitting device 100 may provide the pairing LED by switching it to green. In addition, the A/V transmitting device 100 may change the LED color during screen transmission to provide status information.

FIG. 5 may represent, for example, an initial pairing operation between an A/V transmission apparatus 100 and an A/V reception apparatus 200.

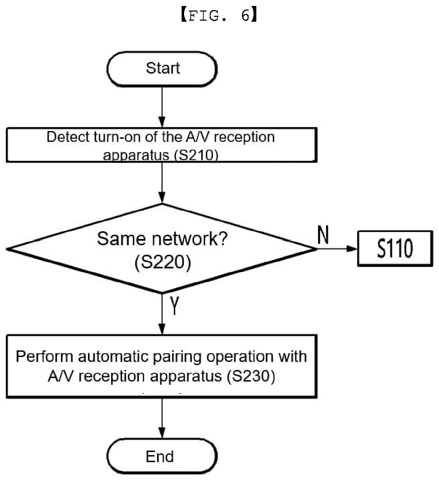

In this case, FIG. 6 may represent an operation after FIG. 5, i.e., after at least one pairing.

Referring to FIG. 6, at step S210, the processor 190 may detect the turn-on of the A/V reception apparatus 200.

At step S220, the processor 190 may determine whether it belongs to the same network as the A/V reception apparatus 200.

At step S230, if it belongs to the same network as the A/V reception apparatus 200, the processor 190 may perform an automatic pairing operation with the A/V reception apparatus 200. At this time, the processor 190 can perform automatic pairing with the A/V reception apparatus 200 separately, regardless of a temporary key verification operation or pairing request reception.

However, if the processor 190 determines at step S220 that the A/V reception apparatus 200 does not belong to the same network, the processor can return to step S110 of FIG. 5.

Unlike FIGS. 5 and 6, FIG. 7 can be viewed as an example of a pairing operation when an additional A/V reception apparatus is present.

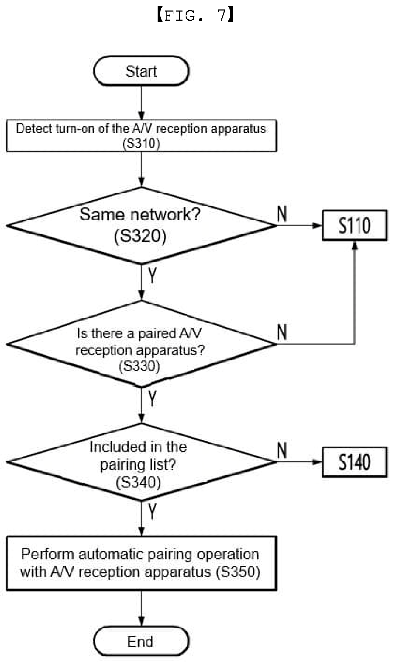

Referring to FIG. 7, at step S310, the processor 190 can detect the A/V reception apparatus turning on.

At step S320, the processor 190 can determine whether the detected A/V reception apparatus belongs to the same network.

At step S330, if the processor 190 determines that the detected A/V reception apparatus belongs to the same network, it may determine whether there is an A/V reception apparatus 200 paired with the network.

However, if the processor 190 determines that the detected A/V reception apparatus does not belong to the same network, it may return to step S110 of FIG. 5.

At step S340, if the processor 190 determines that there is an A/V reception apparatus 200 paired with the network, it may determine whether the detected A/V reception apparatus is included in the pairing list of the A/V reception apparatus 200.

However, if the processor 190 determines that there is no A/V reception apparatus 200 paired with the network, it may return to step S110.

At step S350, if the processor 190 determines that the detected A/V reception apparatus is included in the pairing list of the A/V reception apparatus 200, the processor 190 may perform an automatic pairing operation for the detected A/V reception apparatus without a separate temporary key verification procedure or pairing request.

On the other hand, if the processor 190 determines that the detected A/V reception apparatus is not included in the pairing list of the A/V reception apparatus 200, the processor may return to step S140 of FIG. 5.

Meanwhile, FIG. 8 describes a processing method in a case where a re-pairing operation is required due to an event occurrence, even though there is a pairing history, such as an initial pairing as shown in FIG. 5, between the A/V transmitting device 100 and the A/V reception apparatus 200. In this case, the event may include various situations, such as a change in the device, deletion of pairing from the pairing list on a specific device, a network change, an error, or a manual/forced re-pairing request by the user.

Referring to FIG. 8, steps S410 to S420 are identical to those in FIG. 6 described above, and thus, a detailed description thereof will be omitted.

In step S430, the processor 190 may determine whether a re-pairing operation is performed. As described above, whether a re-pairing operation is performed may be determined to be performed when a user manually/mandatorily requests or other aforementioned events occur.

In step S440, even in the case of a re-pairing operation, if there is a previous pairing history and the processor 190 is determined to belong to the same network as determined in step S420, the processor 190 may perform an automatic pairing operation without a separate temporary key verification procedure.

On the other hand, if a re-pairing operation is not performed, the process may return to step S140 of FIG. 5.

In addition, according to the present disclosure, when the A/V transmission apparatus 100 is paired with at least one A/V reception apparatus 200 belonging to the same network, and when, for example, a multi-view mode is executed or multiple application executions are requested in the A/V reception apparatus 200, the application execution screen of a specific view or the execution screen of an application executed later may be separately transmitted to other A/V reception apparatus that are linked or paired with the paired A/V reception apparatus 200. In this case, it is preferable that all A/V reception apparatus belong to the same network as the A/V transmission apparatus 100. However, the present disclosure is not limited thereto.

Even if not specifically mentioned, the order of at least some of the operations disclosed in the present disclosure may be performed simultaneously, performed in a different order than the previously described order, or some may be omitted/added.

According to one embodiment of the present disclosure, the above-described method can be implemented as processor-readable code on a program-recorded medium. Examples of processor-readable media include ROM, RAM, CD-ROM, magnetic tape, floppy disks, and optical data storage devices.

The display device described above is not limited to the configurations and methods of the embodiments described above. Furthermore, the embodiments may be configured by selectively combining all or some of the embodiments to allow for various modifications.

### [Industrial Applicability]

The present disclosure relates to pairing operations for data transmission and reception between A/V transmission and reception devices, and is applicable to various industrial fields, such as wireless display systems, and thus has industrial applicability.

## Claims

1. An Audio/Video (A/V) transmission apparatus, comprising:
a processor configured to generate key data for pairing with an A/V reception apparatus and register the key data with a first server, and to control pairing with the A/V reception apparatus in response to a pairing request, which includes the key data registered with the first server, received from the A/V reception apparatus.

2. The A/V transmission apparatus of claim 1, wherein the processor is configured to transmit a packet including device identification information and to establish a connection with the A/V reception apparatus according to a first communication protocol.

3. The A/V transmission apparatus of claim 2, wherein, when the connection according to the first communication protocol is established with the A/V reception apparatus, the processor is configured to obtain network information from the A/V reception apparatus and connect to the same network.

4. The A/V transmission apparatus of claim 3, wherein, when connected to the same network as the A/V reception apparatus, the processor is configured to generate the key data and register the key data with the first server.

5. The A/V transmission apparatus of claim 4, wherein the processor is configured to transmit, to the A/V reception apparatus, a signal including data corresponding to a signal input from the A/V reception apparatus via a second communication protocol.

6. The A/V transmission apparatus of claim 5, wherein, when there is a previous pairing history with the A/V reception apparatus, the processor is configured to automatically perform a pairing operation with the A/V reception apparatus upon connection to the same network, regardless of a pairing request from the A/V reception apparatus.

7. The A/V transmission apparatus of claim 5, wherein the first communication protocol includes Bluetooth Low Energy (BLE), and the second communication protocol includes Wi-Fi.

8. An Audio/Video (A/V) transmission method, comprising:
generating key data for pairing with an A/V reception apparatus;
registering the key data with a server;
receiving, from the A/V reception apparatus, a pairing request including the key data registered with the server; and
pairing with the A/V reception apparatus in response to the pairing request.

9. The A/V transmission method of claim 8, further comprising:
transmitting a packet including device identification information; and
establishing a connection with the A/V reception apparatus according to a first communication protocol.

10. The A/V transmission method of claim 9, further comprising:
when a connection according to the first communication protocol is established with the A/V reception apparatus, obtaining network information from the A/V reception apparatus; and
connecting to the same network based on the obtained network information.

11. The A/V transmission method of claim 10, wherein the key data is registered with the server after connecting to the same network as the A/V reception apparatus.

12. The A/V transmission method of claim 11, further comprising: transmitting, to the A/V reception apparatus, a signal including data corresponding to a signal input from the A/V reception apparatus via a second communication protocol.

13. The A/V transmission method of claim 12, further comprising:
checking whether there is a previous pairing history with the A/V reception apparatus; and
when the checking result indicates that there is a previous pairing history with the A/V reception apparatus, automatically performing a pairing operation with the A/V reception apparatus upon connection to the same network, regardless of a pairing request from the A/V reception apparatus.

14. The A/V transmission method of claim 12, wherein the first communication protocol includes Bluetooth Low Energy (BLE), and the second communication protocol includes Wi-Fi.
